# EUROPEAN PATENT SPECIFICATION

(11) **EP 2 385 691 B1**
(45) Date of publication and mention of the grant of the patent: **27.03.2013**
(21) Application number: 10168762.2
(22) Date of filing: 07.07.2010
(51) Int. Cl.: H04M 3/42

(54) **Call handling during parking state**
Anrufabwicklung im Parkzustand
Traitement des appels pendant le stationnement

(30) Priority: 07.05.2010 IN CH12882010
(43) Date of publication of application: 09.11.2011
(73) Proprietor: Alcatel Lucent, 75007 Paris (FR)
(72) Inventor: Venkata Subramanian, Jayaraman, 600032 Chennai (IN); Kumar, Ramadoss, 600087 Chennai, Tamilnadu (IN)
(74) Representative: Sciaux, Edmond

(56) References cited:
- EP-A1- 1 761 016
- US-A1- 2003 215 080
- US-A1- 2007 291 920
- US-B1- 6 483 912

## Description

### TECHNICAL FIELD

The present invention relates to communication networks and, more particularly, to call completion during parking state in communication networks.

### BACKGROUND

Present day communication networks such as Next Generation Networks (NGN), Internet Protocol (IP) networks and so on offer different services to users such as call completion on busy subscriber (CCBS), Call Forwarding on Busy Subscriber (CFBS), Call Forwarding on Busy to Voicemail (CFBVM), call waiting (CW) and so on to enable the user to complete his calls. The call completion features work on a simple logic of checking if the called user is busy. In case the called user is busy, the calling user could leave an intimation that he had tried to connect to the called user. When the called user is done with the call he would receive the intimation and could call the calling user back. In case of Time division networks (TDM), the control of a call was always with the switch, and it was easier to detect every action done by the user. Whereas, in the present day networks involving Internet Protocol (IP), there is no such option to detect the action of the user as the switch is distributed.

In present day communication networks, such the one described in US 2003/0215080, when a called user is off hook and is not active, the calling user gets an indication that the called user is in a busy state. On the other hand, the called user is in parking state as he is off hook but has not initiated a call. Also, the resources needed to set up a call will be allocated to the called user. This is because there is no mechanism to identify the parking state of the user and convey the same to the Media Gateway (MG). The network cannot distinguish between the busy state and parking state of a user and hence even if the user is in parking state he is identified as busy. Parking state is defined as a state where a user is off hooked but no action is performed by him in the time period. Off hook is defined as the condition wherein the user's telephone or mobile device is in busy state on another call. In case of NGN networks employing H.248 protocol, when the switch requests for the status of the user, the parking state of a user is identified as busy. Hence, in the parking state where no action is performed by the user, the user is always allocated the resources necessary to set up a call. This leads to wastage of resources during this phase. In addition, in the parking state there is no assurance on whether call back will actually happen. There is every possibility that the calling user may never get intimation that he had missed a call, and the intimation may never happen until the user is on hook once again.
The document EP 1 761 016 describes a method wherein a user who is on a call using a call appearance at a first terminal is enabled to continue the call on a call appearance at a second terminal, and wherein the second terminal has been excluded from the call. In an illustrative embodiment, a private branch exchange that handles both of the telecommunications terminals receives a first signal that indicates that the first terminal has disconnected from the call. The private branch exchange then receives a second signal that indicates that the second terminal has gone off-hook or otherwise indicates a request to be added to the call. If the private branch exchange receives the second signal within a predetermined time interval after having received the first signal, the exchange adds the second terminal to the call. If the predetermined time interval passes without receiving the second signal, the private branch exchange concludes that the user has indeed hung up from the call. In some embodiments, the private branch exchange also checks whether it had received a second signal within a predetermined time interval *prior* to having received the first signal; if it had, the exchange adds the second terminal to the call.

### SUMMARY

A first object of the invention is a media gateway for handling calls during parking state in a communication network, said media gateway comprising at least one means adapted for:
- determining if a first user is in parking state, by determining that the first user is off hook for more than a pre-configured time period and has not initiated a call;
- sending a first notification indicating a parking state to a second user when said second user tries to connect to said first user during said parking state, and
- stopping allocation of resources to said first user on determining that said first user is in said parking state.

Another object of the invention is a method for handling calls in a communication network, said method performing steps of:
- determining if a first user is in parking state by determining that the first user is off hook for more than a pre-configured time period and has not initiated a call;
- sending a first notification indicating a parking state to a second user when said second user tries to connect to said first user during said parking state, and
- stopping allocation of resources to said first user on determining that said first user is in said parking state.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates communication network architecture, according to embodiments as disclosed herein;

FIG. 2 is a media gateway, according to embodiments as disclosed herein;

FIG. 3 is a flow chart depicting the process of handling call parking state, according to embodiments as disclosed herein; and

FIG. 4 is a sequence diagram depicting a call parking scenario, according to embodiments as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

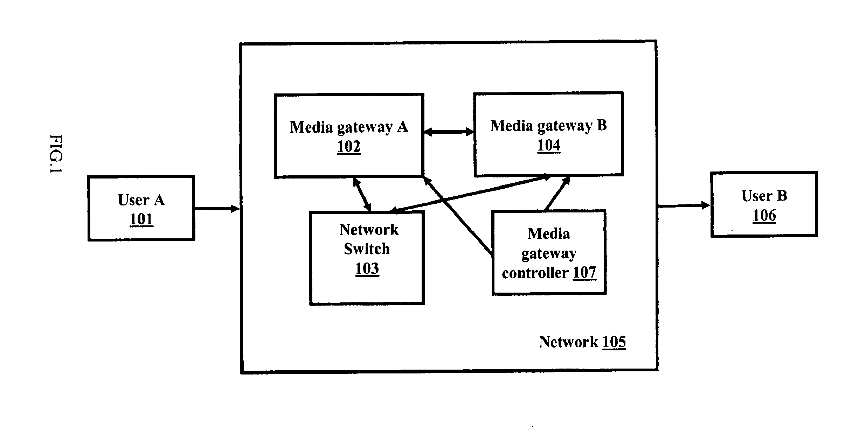

The embodiments herein disclose a mechanism for handling calls during parking state in communication networks by providing systems and methods thereof. Referring now to the drawings, and more particularly to FIGS. 1 through 4, where similar reference characters denote corresponding features consistently throughout the figures, there are shown embodiments.

Systems and methods for handling calls during parking state are disclosed. The method employs a mechanism to differentiate between the busy state and parking state of a particular user B when a calling user A tries to reach him. The method determines that a user B is in parking state if he is off hook for a pre-configured period of time and is not active on any call. The time may be configured by the network operator and stored in the media gateway. Further, the calling user A is also informed of the parking state of the called user B by sending a tone that is introduced to indicate the parking state. On determining that the called user B is in parking state, the media gateway of the called user B sends intimation to the media gateway controller. Further, the media gateway may also send a new reason code to the media gateway controller indication parking state. Later, if the calling user A tries to book a call back to the called user B, the MG ensures that the booking is rejected and further any resources allocated to the called user B are released. On the other hand, if the called user B is in a busy state, the method sends a busy tone to the calling user A. In this case, the calling user A may also book a call back on knowing that called user B is busy.

FIG. 1 illustrates communication network architecture, according to embodiments as disclosed herein. The network 105 comprises Media gateway A 102, a switch 103 and Media Gateway B 104. In addition, a user A 101 and user B 106.

The user A 101 may be a calling user who has initiated a call to another user B 106. Both the user A 101 and B 106 may have registered for the service with the network operator to get indications of the parking state during a call. Or it may be possible that only the called user B 106 is subscribed for the service.

The media gateway A 102 and media gateway B 104 converts digital media streams between disparate telecommunication networks. The MGs A 102, B 104 convert between different transmission and coding schemes. The MGs A 102, B 104 is configured to identify the parking state of a called user and then play a new tone called as parking tone to the calling user when a called user is in parking state. The MGs A 102 and B 104 are configured to check the state of the user and if the user is off the hook for a pre-configured time and is in null state, the MGs A 102 and B 104 store the Switched Circuit Network (SCN) termination status of the user as parking. The MGs A 102 and B 104 play the tone only when directed by the media gateway controller 107. The MGs A 102 and B 104 are responsible for returning the state of the termination as parking state in audit descriptor to the media gateway controller. The MGs A 102 and B 104 reject the add request message and sends a new reason code.

The switch 103 acts as intermediate means for interactions between the network components and the users. On receiving intimation for parking state or busy state from one media gateway, the switch 103 informs the other media gateway of the same. The switch 103 routes the messages and control signal to and from the network 105 components.

The network 105 may be a communication network such as IP Multimedia Subsystem (IMS) network, Next Generation Networks (NGN), Session Initiation Protocol (SIP) network or the like.

The user B 106 may be a called user to whom a calling user makes a call. In another embodiment, the user B 106 may also be a calling user. Further, the user B 106 and user A 101 may belong to the same network operator or to different network operators.

The media gateway controller 107 is responsible for issuing control signals to the media gateways A 101 and B 106. The media gateway controller 107 directs the media gateways A 101 and B 106 to play the tone assigned for parking state to the user.

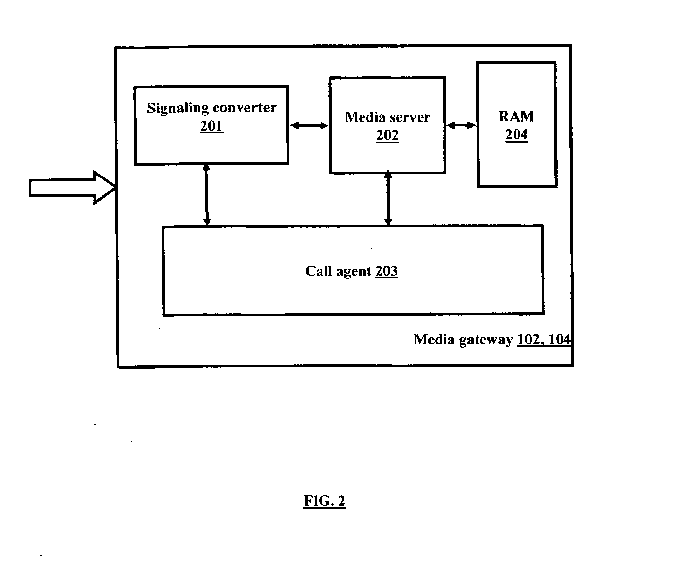

FIG. 2 is a media gateway, according to embodiments as disclosed herein. The media gateway A 102, B 104 comprises of sub components such as a signal converter 201, a media server 202, a call agent 203 and a RAM 204. The media gateway A 102, B 104 converts media provided in one type of network to the format required in another type of network. For example, a media gateway A 102, B 104 could terminate bearer channels from a switched circuit network (e.g. DS0s) and media streams from a packet network (e.g. RTP streams in an IP network). The media gateway A 102 and B 104 may be capable of processing audio, video and T.120 alone or in any combination, and may be capable of full duplex media translations. The media gateway A 102 and B 104 may also play audio/video messages and perform other IVR functions, or may perform media conferencing. Media streaming functions such as echo cancellation, Dual Tone Multi Frequency (DTMF), and tone sender are also located in the media gateway A 102 and B 104. The media gateway A 102 and B 104 is often controlled by a separate Media Gateway Controller, which provides the call control and signaling functionality. Communication between the media gateways A 102 and B 104 and the Call Agent 203 is achieved by means of protocols such as the Media Gateway Control Protocol (MGCP) or Megaco (H.248) or Session Initiation Protocol (SIP).

The media gateway A 102 and B 104 are configured to play the parking tone, if directed by media gateway controller to play it. If a SCN termination is in null context and also in off-hook state for more than pre-configured time, then media gateway A 102 and B 104 stores the SCN termination status as parking state and should be in a position to play the parking tone (cg/prt). If SCN termination is in parking state, media gateway A 102 and B 104 may return the state of the termination as "PS" in Audit Descriptor to the media gateway controller. If SCN termination is in parking state, and if an ADD request is received for this termination from media gateway controller, media gateway A 102 and B 104 may reject the ADD request with a new reason "Termination in Parking state". The ADD request may be made in order to make a record of the calling user and give an indication to the called user once his line gets free.

The signal converter 201 handles all the signals received by the media gateway A 102 and B 104 and performs conversion on the signals if required. In an example, the signal converter 201 may convert received switched circuit signals to packet switched signals and so on. Any signal received may be converted into the required format at the output. The signal converter 201 interfaces with the media server 202 and the call agent 203 within the MG 103.

The media server 202 handles the functioning of components in the media gateway A 102 and B 104. The media server 202 maintains a record of the functions to be performed on the data received by the media gateway A 102 and B 104. Depending on the instructions record on the media server 202, the media server 202 may issue signals for the functioning of other units of the media gateway A 102 and B 104. The media server 202 is interfaced with a Random Access Memory unit (RAM) 204. The RAM 204 stores any data required for processing of the signals. The MG 103 may be configured for specific applications by storing specific sets of instructions in the RAM 204.

The call agent 203 is responsible for handling all the call processing functions within the media gateway A 102 and B 104. The call agent 203 also handles user specific functions and applications. The call agent 204 takes care of the notification and reason code sent to the switch 103. The call agent 204 inserts the necessary reason codes in the termination messages.

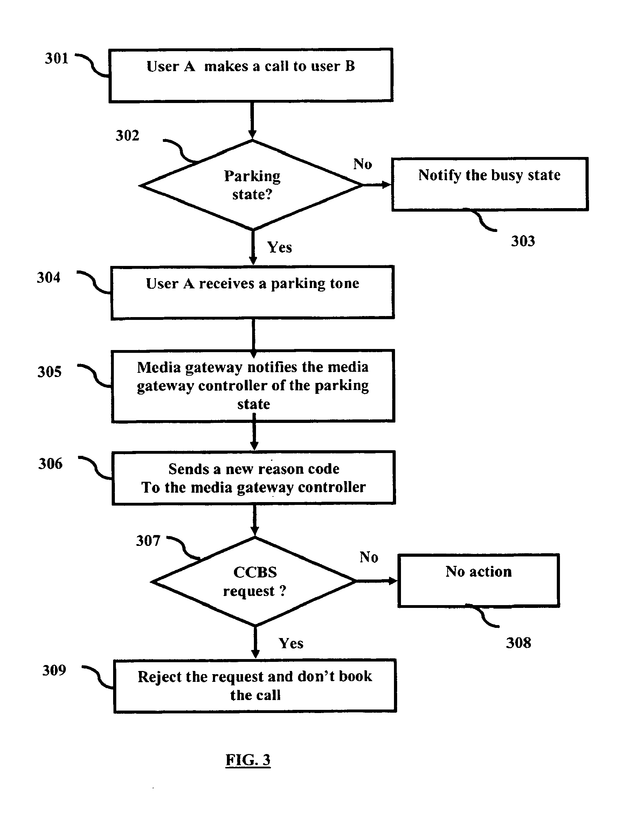

FIG. 3 is a flow chart depicting the process of handling call parking state, according to embodiments as disclosed herein. User A 101 makes (301) a call to another user B 106. The user A 101 and user B 106 may belong to the same network operator or to different network operators. The media gateway B 106 keeps (302) a track of the state of the user 106 and informs the network switch 103 about the state of the user B 106. The media gateway B 104 determines that user B 106 is in parking state as the user B 106 is off hook for more than the pre-configured time and is in a null state. On confirming the parking state of the user B 106, the media gateway B 104 intimates the user A 101 of the parking state. The intimation may be in the form of a new tone or an audio track or some other variation of the sound that is assigned for the purpose of indicating the parking state. On receiving (304) the parking tone, user A 101 knows that user B 106 is in parking state. In an embodiment, the user A 101 may further perform required actions to put user B 106 out of the parking state or to inform him for a call back. In other embodiment, it may also be possible that the user B 106 is really busy; in that case the media gateway B 104 may send (303) a busy tone to the user A 101. Further, the media gateway B 104 may inform (305) the media gateway controller of the parking state of user B 106. The media gateway A 104 may send (306) a new reason code to the media gateway controller in the termination message to notify the parking state. The new reason code may be of the form like 'termination in parking state' or the like. The media gateway B 104 then checks (307) if there is an ADD request message received from the media gateway A 102 for call back service. In case there is no ADD request message, no action is performed (308). If there is an ADD request message the media gateway B 104 rejects (309) the requests and does not book the call. In an embodiment, the method employs the functionality of introducing a new tone to indicate the parking state of the user and further inform the media gateways about the parking state by sending an indication in the protocol message itself. In another embodiment, during audit of terminations the parking state may be indicated using new value of parking state service state property within the termination state descriptor. The various actions in method 300 may be performed in the order presented, in a different order or simultaneously. Further, in some embodiments, some actions listed in FIG. 3 may be omitted.

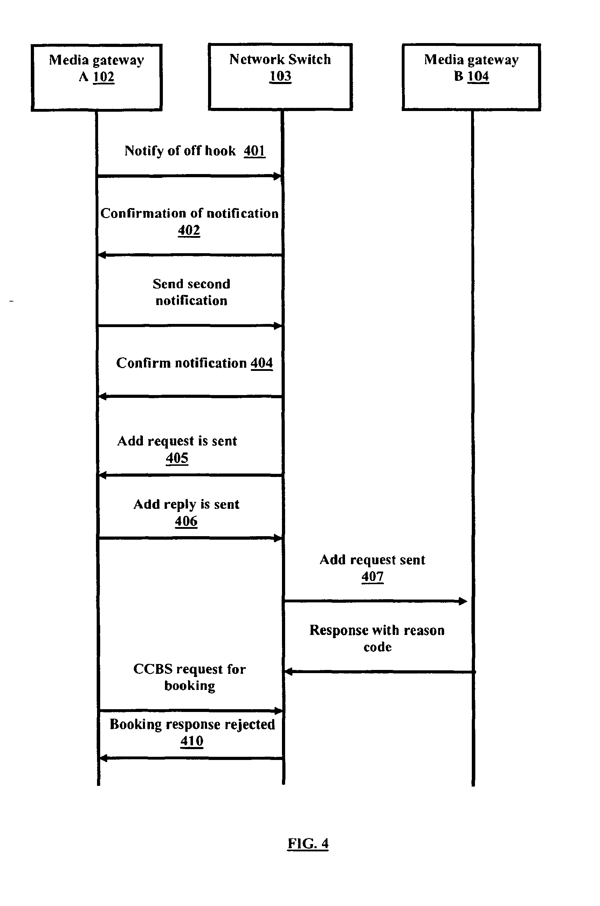

FIG. 4 is a sequence diagram depicting a call parking scenario, according to embodiments as disclosed herein. User A 101 initiates a call to the user B 106. The media gateway A 102 informs (401) the network switch that user A 101 is off hook and is making a call. The network switch may send (402) a response for the notification back to the media gateway A 102. The media gateway A 102 then sends (403) a notification with digits as per the standard H.248 protocol to the network switch 103. The network switch 103 sends (404) a response message for the notification. The user A 101 may receive a parking tone on his mobile device. The parking tone signal id may be 'prt (0x0039)'.

In an embodiment, the tone for a parking state user may be as follows: !/1 [192.168.6.123] T=67050{C=4{MF=agw7line1 {M{O{MO=SR}}, E=1114113 {ctyp/dtone,al/on{strict=exact},al/of{strict=exact} ,al/fl,g/sc},SG{SL=1 {**cg/prt{**SY=TO,DR=65516},xcg/roh{SY=TO,DR=5 00,NC={TO} } } } } } }K{67049}

Whereas for a busy user the tone may be !/1 [192.168.6.123] T=67050 {C=4 {MF=agw7line1 {M{O{MO=SR}}, E=1114113 {ctyp/dtone,al/on{strict=exact},al/of{strict=exact} ,al/fl,g/sc},SG{SL=1 {**cg/bt**{SY=TO,DR=65516},xcg/roh{SY=TO,DR=50 0,NC={TO} } } } } } }K{67049}

The cg/prt indicates that the user is in parking state. The network switch 103 sends (405) an ADD request message to the media gateway A 102. The ADD request may contain a context and Real Time Protocol (RTP). The media gateway A 102 sends (406) a reply to the network switch 103. The reply may contain a Session Description Protocol (SDP) giving details of the session. The network switch 103 sends (407) the ADD request to the media gateway B 104. The request may comprise of a context, RTP with a remote descriptor. The media gateway B 104 knows that user B 106 is in parking state and sends (408) a response for the ADD request. The response message may contain a new reason code with the reason as 'Termination in parking state'. Further, the media gateway A 102 sends (409) a CCBS booking to the network switch 103. On receiving the request for CCBS booking the network switch 103 rejects (410) the request as the network switch 103 already knows that user B 104 is in the parking state. In an embodiment, during audit of terminations the parking state shall be indicated by media gateways using new value "PS" service states property within termination state descriptor as follows: AV=<SCN Termination>{M{TS{SI=**PS**,BF=off}. Where PS indicates the parking state. The various actions in method 400 may be performed in the order presented, in a different order or simultaneously. Further, in some embodiments, some actions listed in FIG. 4 may be omitted.

In an embodiment, the introduction of informing the parking state of the user in the protocol message may be employed in features such as call forward on parking, call forward on parking to voice mail or the like. The method allows implementation of the features that are given to 'user busy' case to the user in parking state case. Unnecessary allocation of the resources for a parked user shall be removed by the method.

The embodiments disclosed herein can be implemented through at least one software program running on at least one hardware device and performing network management functions to control the network elements. The network elements shown in Fig. 1 and 2 include blocks which can be at least one of a hardware device, or a combination of hardware device and software module.

The embodiment disclosed herein specifies a system for handling calls during parking state of a user. The mechanism allows intimating a calling user that a called user is in a parking state and further to not book call back for that user by providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The means employed could be at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

## Claims

1. A media gateway (102, 104) for handling calls during parking state in a communication network (105), said media gateway (102,104) comprising at least one means adapted for determining if a first user is in parking state, by determining that the first user is off hook for more than a pre-configured time period and has not initiated a call; this media gateway being **characterized in that** it further comprises means for:
sending a first notification indicating a parking state to a second user when said second user tries to connect to said first user during said parking state, and
stopping allocation of resources to said first user on determining that said first user is in said parking state.

2. The media gateway (102,104) as in claim 1, wherein said media gateway (102, 104) is further adapted to send a second notification with a reason code to said first user in a termination message for indicating said parking state.

3. The media gateway (102, 104) as in claim 1, wherein said media gateway (102,104) is adapted to send a first notification in the form of at least one of tone, message.

4. The media gateway (102, 104) as in claim 1, wherein said media gateway (102, 104) is further adapted to reject a call booking service for said second user when said second user tries to book a call to said first user when said first user is in said parking state.

5. The media gateway (102,104) as in claim 1, wherein said media gateway (102,104) is adapted to pre-configure a time period above which said first user is determined to be in said parking state.

6. The media gateway (102, 104) as in claim 1, wherein said media gateway (102, 104) is adapted to determine said parking state during audit of terminations.

7. The media gateway (102,104) as in claim 1, wherein said media gateway (102,104) is adapted to determine said parking state during call handling process.

8. A method for handling calls in a communication network (105), said method performing steps of determining if a first user is in parking state by determining that the first user is off hook for more than a pre-configured time period and has not initiated a call; this method being **characterized in that** it further comprises the steps of:
sending a first notification indicating a parking state to a second user when said second user tries to connect to said first user during said parking state, and
stopping allocation of resources to said first user on determining that said first user is in said parking state.

9. The method as in claim 9, wherein said method is further adapted to send a second notification with a reason code to said first user in a termination message for indicating said parking state.

10. The method as in claim 9, wherein said method sends a first notification in the form of at least one of tone, message.

11. The method as in claim 9, wherein said method further rejects a call booking service for said second user when said second user tries to book a call to said first user when said first user is in said parking state.

12. The method as in claim 9, wherein said method pre-configures a time period above which said first user is determined to be in said parking state.

13. The method as in claim 9, wherein said method determines said parking state during audit of terminations.

14. The methods as in claim 9, wherein said method determines said parking state during call handling process.

## Patentansprüche

1. Media-Gateway (102,104) zur Abwicklung von Anrufen während des Parkzustands in einem Kommunikationsnetzwerk (105), wobei das besagte Media-Gateway (102,104) mindestens ein Mittel umfasst, welches dazu ausgelegt ist, zu ermitteln, ob sich ein erster Teilnehmer im Parkzustand befindet, indem ermittelt wird, dass der erste Teilnehmer während einer längeren als eine vorkonfigurierte Zeitspanne abgehoben und keinen Anruf initiiert hat; wobei dieses Media-Gateway **dadurch gekennzeichnet ist, dass** es weiterhin Mittel umfasst, um:
eine erste Benachrichtigung zu senden, welche einem zweiten Teilnehmer mitteilt, wenn der besagte zweite Teilnehmer versucht, während des besagten Parkzustands eine Verbindung mit dem besagten ersten Teilnehmer herzustellen, und
das Zuteilen von Ressourcen an den besagten ersten Teilnehmer einzustellen, wenn ermittelt wurde, dass sich der besagte erste Teilnehmer in dem besagten Parkzustand befindet.

2. Media-Gateway (102,104) nach Anspruch 1, wobei das besagte Media-Gateway (102,104) weiterhin dazu ausgelegt ist, eine zweite Benachrichtigung mit einem Reason-Code in einer Verbindungsabbruchnachricht an den besagten ersten Teilnehmer zu senden, um den besagten Parkzustand zu melden.

3. Media-Gateway (102,104) nach Anspruch 1, wobei das besagte Media-Gateway (102,104) dazu ausgelegt ist, eine erste Benachrichtigung in der Form zumindest entweder eines Tons oder einer Nachricht zu senden.

4. Media-Gateway (102,104) nach Anspruch 1, wobei das besagte Media-Gateway (102,104) weiterhin dazu ausgelegt ist, einen Verbindungsanmeldedienst für den zweiten Teilnehmer zu verweigern, wenn der besagte zweite Teilnehmer versucht, eine Verbindung mit dem besagten ersten Teilnehmer anzumelden, während sich der besagte erste Teilnehmer in dem besagten Parkzustand befindet.

5. Media-Gateway (102,104) nach Anspruch 1, wobei das besagte Media-Gateway (102,104) dazu ausgelegt ist, eine Zeitspanne, nach deren Ablauf bestimmt wird, dass sich der besagte erste Teilnehmer in dem besagten Parkzustand befindet, vorzukonfigurieren.

6. Media-Gateway (102,104) nach Anspruch 1, wobei das besagte Media-Gateway (102,104) dazu ausgelegt ist, den besagten Parkzustand während der Prüfung von Anschlüssen zu ermitteln.

7. Media-Gateway (102,104) nach Anspruch 1, wobei das besagte Media-Gateway (102,104) dazu ausgelegt ist, den besagten Parkzustand während der Durchführung von Anrufabwicklungsprozessen zu ermitteln.

8. Verfahren zur Abwicklung von Anrufen in einem Kommunikationsnetzwerk (105), wobei das Verfahren die Schritte des Ermittelns, ob sich ein erster Teilnehmer im Parkzustand befindet, indem es ermittelt, dass der erste Teilnehmer während eines längeren als eines vorkonfigurierten Zeitraums abgehoben und keinen Anruf initiiert hat, durchführt; wobei dieses Verfahren **dadurch gekennzeichnet ist, dass** es weiterhin die folgenden Schritte umfasst:
Senden einer ersten Benachrichtigung, welche einem zweiten Teilnehmer einen Parkzustand anzeigt, wenn der besagte zweite Teilnehmer versucht, während des besagten Parkzustands eine Verbindung mit dem besagten ersten Teilnehmer herzustellen, und
Einstellen der Zuteilung von Ressourcen an den besagten ersten Teilnehmer, nachdem ermittelt wurde, dass sich der besagte erste Teilnehmer in dem besagten Parkzustand befindet.

9. Verfahren nach Anspruch 9, wobei das besagte Verfahren weiterhin dazu ausgelegt ist, eine zweite Benachrichtigung mit einem Reason-Code in einer Verbindungsabbruchnachricht an den besagten ersten Teilnehmer zu senden, um den besagten Parkzustand anzuzeigen.

10. Verfahren nach Anspruch 9, wobei das besagte Verfahren eine erste Benachrichtigung in der Form zumindest entweder eines Tons oder einer Nachricht sendet.

11. Verfahren nach Anspruch 9, wobei das besagte Verfahren weiterhin einen Verbindungsanmeldedienst für den besagten zweiten Teilnehmer verweigert, wenn der besagte zweite Teilnehmer versucht, eine Verbindung zu dem besagten ersten Teilnehmer anzumelden, während sich der besagte erste Teilnehmer in dem besagten Parkzustand befindet.

12. Verfahren nach Anspruch 9, wobei das besagte Verfahren eine Zeitspanne, nach deren Ablauf bestimmt wird, dass sich der besagte erste Teilnehmer in dem besagten Parkzustand befindet, vorkonfiguriert.

13. Verfahren nach Anspruch 9, wobei das besagte Verfahren den besagten Parkzustand während der Prüfung von Anschlüssen ermittelt.

14. Verfahren nach Anspruch 9, wobei das besagte Verfahren den besagten Parkzustand während der Durchführung von Anrufabwicklungsprozessen ermittelt.

## Revendications

1. Passerelle média (102, 104) pour traiter les appels pendant l'état de mise en garde dans un réseau de communication (105), ladite passerelle média (102, 104) comprenant au moins un moyen adapté pour déterminer si un premier utilisateur se trouve dans un état de mise en garde en déterminant que le premier utilisateur est en situation décrochée pendant plus qu'une période préconfigurée et n'a pas initié un appel ; cette passerelle média étant **caractérisée en ce qu'**elle comprend en outre des moyens pour :
envoyer une première notification indiquant un état de mise en garde à un second utilisateur lorsque ledit second utilisateur essaie de se connecter audit premier utilisateur pendant ledit état de mise en garde, et
arrêter l'attribution des ressources audit premier utilisateur sur détermination du fait que ledit premier utilisateur se trouve dans ledit état de mise en garde.

2. Passerelle média (102, 104) selon la revendication 1, avec laquelle ladite passerelle média (102, 104) est en outre adaptée pour envoyer une seconde notification avec un code de raison audit premier utilisateur dans un message de terminaison pour indiquer ledit état de mise en garde.

3. Passerelle média (102, 104) selon la revendication 1, avec laquelle ladite passerelle média (102, 104) est adaptée pour envoyer une première notification sous la forme d'au moins un signal sonore ou un message.

4. Passerelle média (102, 104) selon la revendication 1, avec laquelle ladite passerelle média (102, 104) est en outre adaptée pour rejeter un service de réservation d'appel pour ledit second utilisateur lorsque ledit second utilisateur essaie de réserver un appel vers ledit premier utilisateur lorsque ledit premier utilisateur se trouve dans ledit état de mise en garde.

5. Passerelle média (102, 104) selon la revendication 1, avec laquelle ladite passerelle média (102, 104) est adaptée pour préconfigurer une période au-delà de laquelle ledit premier utilisateur est déterminé se trouver dans ledit état de mise en garde.

6. Passerelle média (102, 104) selon la revendication 1, avec laquelle ladite passerelle média (102, 104) est adaptée pour déterminer ledit état de mise en garde pendant l'audit des terminaisons.

7. Passerelle média (102, 104) selon la revendication 1, avec laquelle ladite passerelle média (102, 104) est adaptée pour déterminer ledit état de mise en garde pendant le processus de traitement d'appel.

8. Procédé de traitement des appels dans un réseau de communication (105), ledit procédé exécutant les étapes de détermination si un premier utilisateur se trouve dans un état de mise en garde en déterminant que le premier utilisateur est en situation décrochée pendant plus qu'une période préconfigurée et n'a pas initié un appel ; ce procédé étant **caractérisé en ce qu'**il comprend en outre les étapes suivantes :
envoi d'une première notification indiquant un état de mise en garde à un second utilisateur lorsque ledit second utilisateur essaie de se connecter audit premier utilisateur pendant ledit état de mise en garde, et
arrêt de l'attribution des ressources audit premier utilisateur sur détermination du fait que ledit premier utilisateur se trouve dans ledit état de mise en garde.

9. Procédé selon la revendication 9, selon lequel ledit procédé est en outre adapté pour envoyer une seconde notification avec un code de raison audit premier utilisateur dans un message de terminaison indiquant ledit état de mise en garde.

10. Procédé selon la revendication 9, selon lequel ledit procédé envoie une première notification sous la forme d'au moins un signal sonore ou un message.

11. Procédé selon la revendication 9, selon lequel ledit procédé rejette un service de réservation d'appel pour ledit second utilisateur lorsque ledit second utilisateur essaie de réserver un appel vers ledit premier utilisateur lorsque ledit premier utilisateur se trouve dans ledit état de mise en garde.

12. Procédé selon la revendication 9, selon lequel ledit procédé préconfigure une période au-delà de laquelle ledit premier utilisateur est déterminé se trouver dans ledit état de mise en garde.

13. Procédé selon la revendication 9, selon lequel ledit procédé détermine ledit état de mise en garde pendant l'audit des terminaisons.

14. Procédé selon la revendication 9, selon lequel ledit procédé détermine ledit état de mise en garde pendant le processus de traitement d'appel.
